(19) Europäisches Patentamt
European Patent Office
Office européen des brevets

(11) **EP 4 385 615 A1**

(12) **DEMANDE DE BREVET EUROPEEN**

(43) Date de publication:
**19.06.2024 Bulletin 2024/25**

(21) Numéro de dépôt: **23212719.1**

(22) Date de dépôt: **28.11.2023**

(51) Classification Internationale des Brevets (IPC):
**B01J 2/02** (2006.01)    **B01J 2/08** (2006.01)
**B01J 13/00** (2006.01)

(52) Classification Coopérative des Brevets (CPC):
**B01J 2/02; B01J 2/08; B01J 13/00**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **16.12.2022 FR 2213515**

(71) Demandeur: **Commissariat à l'énergie atomique et aux énergies alternatives**
**75015 Paris (FR)**

(72) Inventeurs:
• **BADALAN, Matei**
**38054 Grenoble cedex 09 (FR)**
• **BOTTAUSCI, Frédéric**
**38054 Grenoble cedex 09 (FR)**
• **ACHARD, Jean-Luc**
**38054 Grenoble cedex 09 (FR)**
• **ADISSON, Lucie**
**38054 Grenoble cedex 09 (FR)**

(74) Mandataire: **INNOV-GROUP**
**310, avenue Berthelot**
**69372 Lyon Cedex 08 (FR)**

(54) **MODULE DESTINÉ À ÊTRE EMPLOYÉ DANS UN SYSTÈME DE PRODUCTION DE GOUTTES GÉLIFIÉES**

(57) L'invention concerne un module (M) destiné à être employé dans un système de production de gouttes gélifiées, ledit système comportant une centrifugeuse, ledit module (M) étant monté sur la centrifugeuse et actionnable en rotation autour d'un axe, dit axe de centrifugation, par ladite centrifugeuse, le système comportant également une unité de production de gouttes (G) comportant un réservoir de liquide et une buse d'expulsion (10) coopérant avec le réservoir et par laquelle des gouttes peuvent être produites par centrifugation, ledit module (M) comportant un tube (201) dans lequel les gouttes sont expulsées, lesdites gouttes étant destinées à atteindre le fond du tube en traversant un bain gélifiant, la surface interne du tube portant au moins un déflecteur (D) comprenant une ou plusieurs faces agencées pour dévier la trajectoire de chaque goutte à l'intérieur du bain gélifiant en vue d'allonger leur parcours et de favoriser leur gélification.

Fig. 1

EP 4 385 615 A1

**Description**

**Domaine technique de l'invention**

La présente invention se rapporte à un module destiné à être employé dans un système de production de gouttes gélifiées. L'invention concerne également le système incluant un tel module et éventuellement plusieurs de ces modules, ainsi qu'un procédé de production de gouttes gélifiées mis en oeuvre à l'aide dudit système.

**Etat de la technique**

Une solution connue pour produire des gouttes gélifiées (appelées également capsules) consiste à utiliser un réservoir contenant un liquide, un capillaire par lequel les gouttes sont créées et expulsées, un système de mise en rotation tel qu'une centrifugeuse et un tube récepteur à l'intérieur duquel les gouttes sont expulsées. Le tube est rempli au moins partiellement d'un bain gélifiant. Par centrifugation, les gouttes sont expulsées en sortie du capillaire vers l'intérieur du tube. En traversant le bain gélifiant, les gouttes se gélifient et viennent se loger au fond du tube. La demande de brevet WO2022/135756A1 décrit un tel système.

La gélification des gouttes n'est cependant pas instantanée. Cela est encore plus vrai lorsque les gouttes monodisperses sont produites à haute fréquence par une augmentation de la vitesse de la centrifugeuse. Dans ce cas, on a constaté que les gouttes n'ont pas toujours le temps d'être entièrement gélifiées avant de s'accumuler au fond du tube, et peuvent alors se coller entre elles et former un amas inutilisable.

Comme la hauteur du bain gélifiant se trouve limitée par la hauteur du tube (le tube employé dans une centrifugeuse commerciale étant standard), ce problème persiste et ne peut être résolu aisément.

Le but de l'invention est de proposer une solution pour permettre une gélification de gouttes, en évitant de créer des amas en fond de tube, tout en restant dans un système contraint, dans lequel l'épaisseur du bain gélifiant ne peut pas être augmentée.

**Exposé de l'invention**

Ce but est atteint par module destiné à être employé dans un système de production de gouttes gélifiées, ledit système comportant une centrifugeuse, ledit module étant monté sur la centrifugeuse et actionnable en rotation autour d'un axe, dit axe de centrifugation, par ladite centrifugeuse, le système comportant également une unité de production de gouttes comportant un réservoir de liquide et une buse d'expulsion coopérant avec le réservoir et par laquelle des gouttes peuvent être produites par centrifugation, ledit module comportant un tube dans lequel les gouttes sont expulsées, ledit tube étant délimité par un fond et une paroi latérale définissant un volume interne destiné à recevoir sur une partie de sa hauteur un bain gélifiant, lesdites gouttes étant destinées à atteindre le fond du tube en traversant le bain gélifiant, ladite paroi latérale du tube comportant une surface interne et une surface externe, ledit module étant caractérisé en ce que la surface interne porte au moins un déflecteur formant une rampe par rapport à ladite surface interne pour dévier la trajectoire de chaque goutte à l'intérieur du bain gélifiant en vue d'allonger leur parcours et de favoriser leur gélification avant d'atteindre le fond du tube.

Selon une réalisation particulière, la surface interne du tube porte plusieurs déflecteurs superposés.

Selon une autre réalisation, ledit au moins un déflecteur présente une section transversale en forme de triangle rectangle.

Selon une autre particularité, ledit au moins déflecteur, ayant une section en forme de triangle rectangle comporte un angle et un premier côté suivant la direction longitudinale du tube qui sont choisies de manière à ce qu'un deuxième côté s'étende sur une longueur suivant la direction transversale au tube qui est comprise entre 1% et 95% du diamètre du tube lorsque celui-ci est de section circulaire.

Selon une autre réalisation, le déflecteur comporte au moins une face de forme concave. Selon une autre réalisation particulière, ledit au moins un déflecteur présente une section transversale en forme de demi-cercle.

Selon une réalisation particulière, ledit au moins un déflecteur est réalisé sous la forme d'un anneau, destiné à être enfoncé dans le tube.

Selon une particularité, ledit anneau est interrompu pour disposer d'un effet élastique.

Selon une particularité, la buse d'expulsion est réalisée à l'extrémité d'un capillaire connecté audit réservoir de liquide.

Selon une autre particularité, le réservoir de liquide est intégré au tube du module.

Selon une autre particularité, le capillaire est fixé au module et coopère avec son réservoir.

L'invention concerne également un système de production de gouttes gélifiées, par centrifugation au sein d'un fluide, ledit système étant caractérisé en ce qu'il comporte :

-    Une centrifugeuse,
-    Au moins un module monté sur la centrifugeuse et actionnable en rotation autour d'un premier axe par ladite centrifugeuse, ledit module étant tel que défini ci-dessus.

L'invention concerne également un procédé de création de gouttes gélifiées mis en oeuvre à l'aide d'un système de production, le système de production étant tel que défini ci-dessus, ledit procédé consistant à intégrer au moins un déflecteur porté par la surface interne du tube et agencé pour dévier la trajectoire de chaque goutte à l'intérieur du bain gélifiant en vue d'allonger leur parcours et de favoriser leur gélification avant d'atteindre le fond du tube.

## Brève description des figures

D'autres caractéristiques et avantages vont apparaître dans la description détaillée qui suit faite en regard des dessins annexés dans lesquels :

- La figure 1 montre l'architecture du système et illustre son principe de fonctionnement ;
- La figure 2 montre une simulation de trajectoires de gouttes de tailles différentes produites en sortie d'un capillaire et expulsées dans l'air par centrifugation ;
- La figure 3 montre une séquence d'images illustrant les différentes phases de formation de gouttes en sortie d'un capillaire par gravité ; Cette séquence d'images est issue de la publication *"Villermaux, Pistre et Lhuissier 2013"* ;
- La figure 4 montre la trajectoire d'une goutte expulsée par centrifugation et met en évidence les différents paramètres pertinents de sa trajectoire ;
- La figure 5 montre les différentes forces exercées sur une goutte expulsée par centrifugation (en négligeant la gravité terrestre) ;
- La figure 6A et la figure 6B montre la trajectoire d'une goutte à l'intérieur du système de l'invention, selon deux configurations du système ;
- La figure 6C montre la forme du déflecteur employé dans le système de l'invention ;
- La figure 7 montre un diagramme illustrant la variation en pourcentage du temps de transit d'une goutte à l'intérieur d'un bain gélifiant en fonction de la hauteur du déflecteur et de son angle ;
- La figure 8 montre la trajectoire suivie par une goutte dans un système qui comporte plusieurs déflecteurs successifs ;
- La figure 9 montre un diagramme illustrant la variation du temps de transit d'une goutte à l'intérieur du bain gélifiant, en fonction du nombre de déflecteurs, respectivement dans un cas idéal et dans un cas simulé ;
- La figure 10 montre la trajectoire suivie par une goutte dans un système qui comporte plusieurs déflecteurs successifs, espacés d'un pas réduit ;
- La figure 11 montre un diagramme illustrant l'efficacité du déflecteur en fonction de sa position dans le tube ;
- La figure 12 montre un diagramme illustrant l'efficacité du déflecteur en fonction de la vitesse de rotation appliquée au module ;
- La figure 13 montre plusieurs diagrammes, illustrant pour trois angles de déflecteur (45°, 60°, 75°), la trajectoire de la goutte et la durée pour laquelle la goutte traverse une longueur égale à son diamètre ;
- La figure 14 montre en perspective un exemple de réalisation d'un déflecteur employé dans l'invention ;
- Les figures 15A à 15F montrent plusieurs variantes de réalisation du déflecteur conforme à l'invention, vues en coupe transversale ;
- Les figures 16A et 16B montrent deux exemples dans lesquels les gouttes gélifiées sont agglomérés au fond du tube en amas et séparés au fond du tube ;

## Description détaillée d'au moins un mode de réalisation

L'invention vise la production à haute fréquence de gouttes gélifiées qui demeurent séparées et de taille uniforme. Des gouttes sont formées et expulsées par force centrifuge et sont ensuite gélifiées par passage dans un bain de gélification.

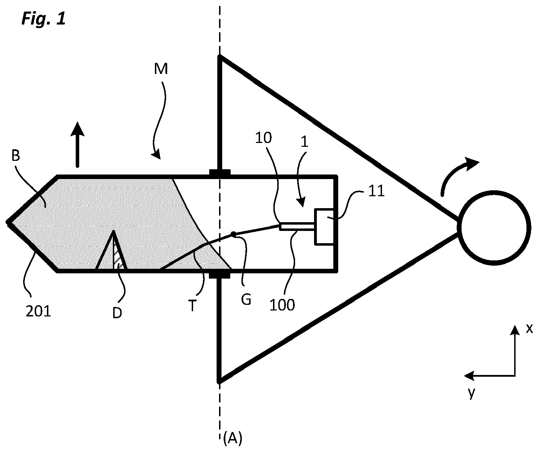

En référence à la figure 1, de manière générale, le système de production de gouttes gélifiées conforme à l'invention comporte principalement :

- Une centrifugeuse ;
- Un module M monté sur la centrifugeuse et actionnable en rotation par la centrifugeuse ;
- Une unité de production de gouttes portée par le module M ;
- Une unité de collecte de gouttes gélifiées également portée par le module M ;

De manière non limitative, la centrifugeuse est par exemple une centrifugeuse de laboratoire munie par exemple de plusieurs modules M montés mobiles en pivotement autour d'un axe (A), intégrant chacun un dispositif d'expulsion 1 (buse + réservoir de liquide). Lors de la mise en rotation, les modules M pivotent jusqu'à l'horizontale, pour placer l'axe du tube et de la buse d'expulsion dans le plan x-y. Il serait également possible de prévoir un système fixe, orientée dans le plan x-y ou faisant un angle déterminé avec ce plan (inférieur à 90°).

Les modules M sont tous indépendants et amovibles par rapport à la centrifugeuse. Ils peuvent ainsi être facilement remplacés pour effectuer de nouveaux essais. Il faut également noter que l'on utilise une centrifugeuse classique, déjà disponible sur le marché. Les modules M sont configurés pour s'adapter à ce type de centrifugeuse déjà disponible.

Selon un aspect avantageux de l'invention, un module M est formé d'un élément monobloc qui porte l'unité de production et l'unité de collecte, de sorte que ces deux unités sont fixes l'une par rapport à l'autre lorsque la production est réalisée dans la centrifugeuse.

Le module M, portant l'unité de production et l'unité de collecte, est mis en rotation par la centrifugeuse du système, autour d'un axe, dit axe de centrifugation. Cet axe est parallèle à un axe z du repère x-y-z et perpendiculaire au plan x-y. En régime de croisière, la vitesse de rotation (référencée ω) appliquée par la centrifugeuse est choisie constante. Les deux unités sont donc entraînées en rotation de manière solidaire, donc à la même vitesse. Elles ont donc toujours la même position l'une par rapport à l'autre lors de la production des gouttes.

Selon un autre aspect de l'invention, le module M est amovible et peut facilement être remplacé au sein de la centrifugeuse. Il est totalement autonome en ce qui concerne la production des gouttes G et la collecte des gouttes une fois gélifiées.

L'unité de production comporte un dispositif d'expulsion 1 chargé d'expulser les gouttes par centrifugation à travers une buse d'expulsion 10. Le dispositif d'expulsion 1 comporte un réservoir 11 de liquide et un capillaire 100 relié audit réservoir 11. Le liquide stocké dans le réservoir 11, soumis à la force centrifuge, se trouve expulsé sous forme de gouttes à travers la buse d'expulsion 10. Par centrifugation, les gouttes G se détachent du capillaire 100 et sont expulsées (vers l'intérieur du tube), dans leur grande majorité, dans le plan x-y (voir explications ci-après).

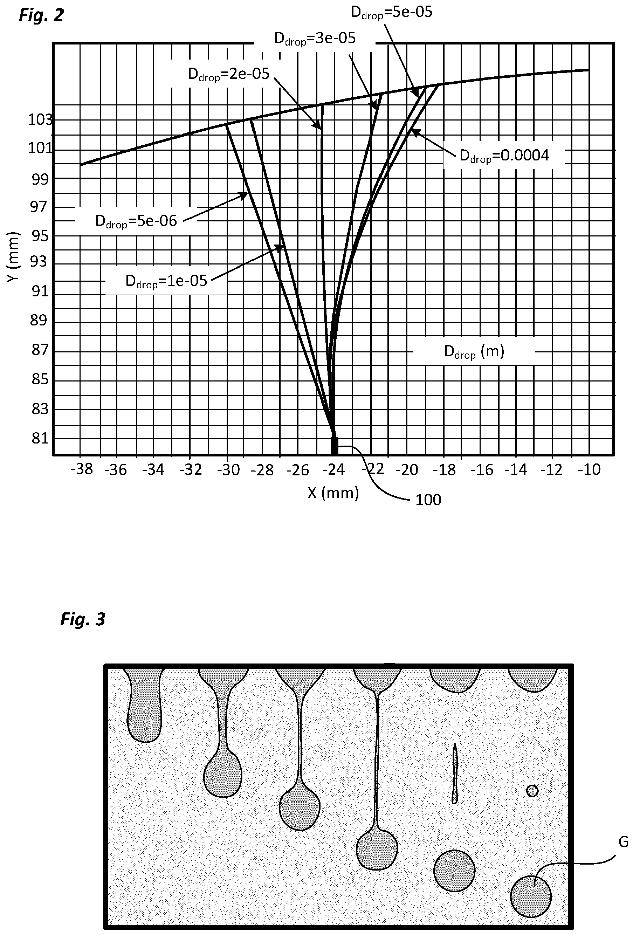

En liaison avec la figure 3, on peut voir qu'à l'extrémité du capillaire, une goutte G se forme et va se détacher lorsqu'elle atteint une taille critique.

L'unité de collecte comporte un tube 201 dans lequel est placé le bain gélifiant B. Pour la formation de gouttes d'alginate, ce bain gélifiant B est par exemple un bain de calcium ($CaCl_2$).

Le tube 201 présente un volume interne défini par un fond et une paroi latérale. La paroi latérale du tube 201 présente une surface interne et une surface externe. Le tube 201 peut être standard avec un diamètre de 29.1mm et une longueur de 114.4mm, pour un volume interne de 50mL.

De manière non limitative, le capillaire 100 peut présenter une longueur déterminée et un diamètre interne déterminé connecté au réservoir de fluide utilisé pour la génération des gouttes G. Un support peut être employé pour venir fixer l'ensemble réservoir-capillaire sur le tube 201.

A la sortie du capillaire, les gouttes G traversent de l'air (et/ou un autre fluide) puis elles sont amenées à traverser le bain gélifiant B placé dans le tube 201. L'épaisseur du bain gélifiant B est contrainte par la hauteur de chute des gouttes et par le volume interne du tube.

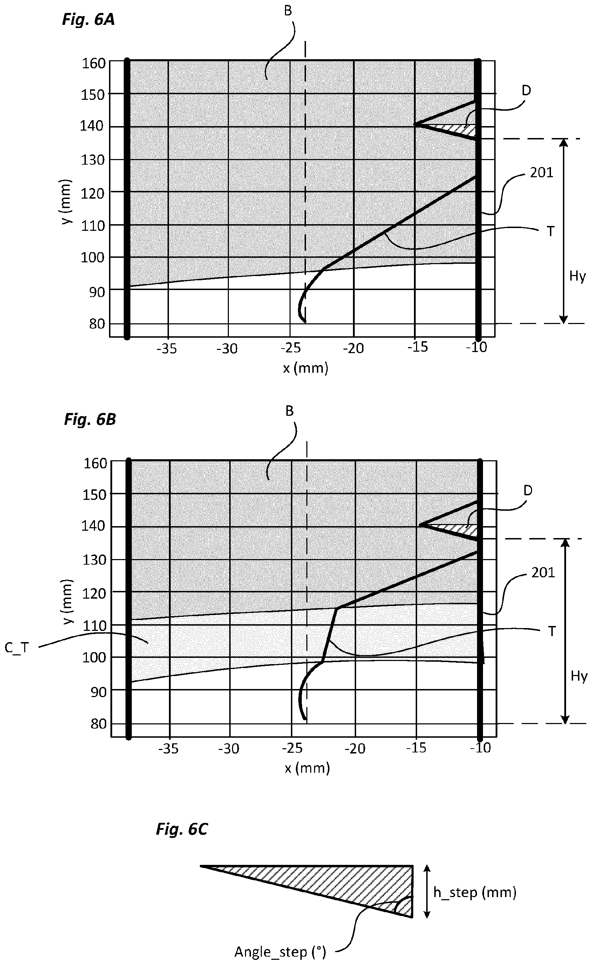

Il faut noter qu'il est également possible d'ajouter dans le tube 201 une couche intermédiaire, entre le bain gélifiant et l'air, constituée d'un fluide moins dense que le fluide de gélification et non miscible avec celui-ci. Après expulsion, la goutte traverse donc d'abord cette couche avant de pénétrer dans le bain gélifiant B. La présence de cette couche (ou bain) intermédiaire permet à la goutte de récupérer une forme sphérique avant son passage dans le bain de gélification B. Ce bain intermédiaire est également appelé couche tampon C_T. Cette couche tampon C_T peut être par exemple une couche de PDMS (Polydiméthyl Siloxane) ou formée d'huile de soja. La figure 6B montre la trajectoire d'une goutte G expulsée dans un tube 201 et traversant une couche tampon C_T puis le bain gélifiant B. Il faut comprendre que la présence de cette couche tampon C_T est une option qui peut s'avérer avantageuse mais que le principe de l'invention reste indépendant de la présence de cette couche tampon. Sur les autres figures annexées, cette couche tampon C_T n'est pas représentée mais il faut comprendre qu'elle pourrait tout à fait être présente, sans préjudice sur le fonctionnement de l'invention.

Toutes les gouttes G expulsées de la buse d'expulsion 10 sont soumises principalement à trois forces (la force de gravité étant considérée comme négligeable) :

- La force centrifuge,
- La force de Coriolis, et
- La force de traînée.

Ces forces imposent aux gouttes G une trajectoire qui dépend de leur taille lorsque les particules présentent des densités similaires. Ainsi, les petites gouttes ont une trajectoire plus rectiligne à la sortie de la buse que celles de tailles plus importantes.

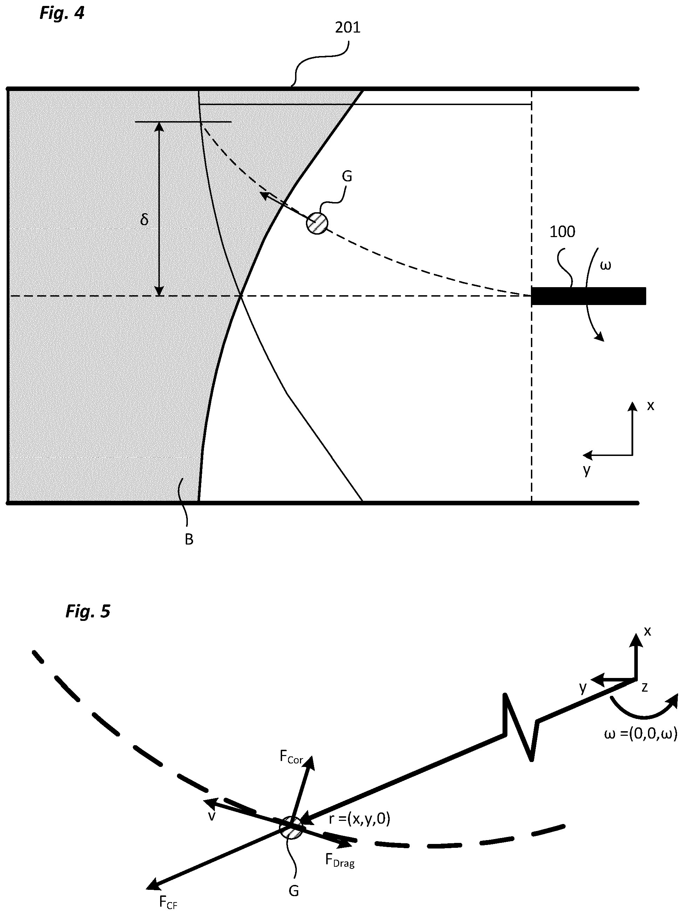

La figure 4 montre de manière schématique la trajectoire d'une goutte G produite en sortie du capillaire 100 et venant s'impacter contre un bain gélifiant B. On peut voir que la goutte se détache du capillaire. Sa vitesse augmente durant son temps de vol avant d'impacter l'interface avec le bain gélifiant B. La trajectoire n'est pas rectiligne car le système est en rotation. La goutte G est ainsi déviée de δ par rapport à l'axe du capillaire 100.

La figure 5 montre de manière détaillée les différentes forces qui s'exercent sur une goutte G après expulsion du capillaire 100.

Dans le repère tournant, en négligeant la gravité terrestre, l'équation du mouvement de la goutte G est ainsi la suivante :

$$m\frac{d\vec{v}}{dt} = \vec{F}_{CF} + \vec{F}_{Cor} + \vec{F}_{Drag}$$

Avec :

La force centrifuge : $\vec{F}_{CF} = -(\rho_{drop} - \rho_{fluid})V_{drop}\vec{\omega} \times (\vec{\omega} \times \vec{r})$

La force de Coriolis : $\vec{F}_{Cor} = -2\rho_{drop}V_{drop}\vec{\omega} \times \vec{v}$

La force de trainée :

$$\vec{F}_{Drag} = -\frac{1}{2}C_D\rho_{fluid}|\vec{v}|^2 A_{drop} \cdot \frac{\vec{v}}{|\vec{v}|}$$

Avec le symbole «×» définissant le produit vectoriel et avec : $C_D = \frac{1}{1+\mu_r}\left[\mu_r\left(\frac{24}{Re} + \frac{4}{Re^{1/3}}\right) + \frac{14.9}{Re^{0.78}}\right]$ qui correspond au coefficient de trainée pour une goutte (référence *Rivkind & Ryskin*) ;

Pour $0.5 \le Re \le 200$

Dans lesquelles ;

$\rho_{drop}$ et $\rho_{fluid}$ correspondent respectivement à la masse volumique du matériau de la goutte et à la masse volumique du fluide environnant ;

$V_{drop}$ correspond au volume de la goutte ;

$A_{drop}$ correspond au maitre couple de la sphère formée par la goutte, avançant dans un fluide ;

Re correspond au nombre de Reynolds ;

$\vec{v}$ correspond au vecteur vitesse de la goutte ;

$\vec{\omega}$ correspond au vecteur vitesse de rotation de l'unité de centrifugation :

$$\vec{\omega} = (0,0,\omega) \ ;$$

$\mu_r$ correspond à la viscosité relative d'une goutte :

$\mu_r = \mu_{drop}/\mu_{fluid}$ ;

$\vec{r}$ correspond au vecteur de position de la goutte, ayant pour coordonnées :

$$\vec{r} = (x, y, 0) \ ;$$

Pour rappel, le nombre de Reynolds Re d'une particule en vol est déterminé à partir de la relation suivante :

$$Re = \frac{\rho_{drop} D_{drop} U_{drop}}{\mu_{fluid}}$$

Il faut noter que le choix de la relation à utiliser pour le coefficient de traînée $C_D$ est déterminé par la viscosité de la goutte, par le rapport d'aspect de la goutte (les relations ci-dessus sont valables pour des sphères) et par la présence en surface d'éventuels contaminants (susceptible de produire l'effet Marangoni).

Si la particule est solide, le coefficient de trainée devra être adapté (par exemple selon la relation de *Kelbaliyev* & *Ceylan*).

La résolution de l'équation de mouvement définie ci-dessus permet ainsi de déterminer la trajectoire de chaque goutte G, en tenant compte de :

- Sa taille (c'est-à-dire son diamètre $D_{drop}$) ;
- Sa masse volumique $\rho_{drop}$ ;
- La vitesse de rotation $\vec{\omega}$ de l'unité de centrifugation ;
- La nature du matériau formant les gouttes ;
- La nature du fluide (viscosité, masse volumique) présent entre la buse d'expulsion 10 et l'unité de collecte ;
- La géométrie du système (positionnement de la sortie du capillaire dans le plan x-y), diamètre du capillaire, longueur du capillaire, débit à l'entrée du capillaire ;

Les simulations ont également permis de démontrer que la vitesse de rotation $\vec{\omega}$ de l'unité de centrifugation n'impacte pas la trajectoire des gouttes, lorsque les gouttes ont une taille importante. Il faut cependant noter que la vitesse de rotation de l'unité de production pourra être adaptée, par exemple en tenant compte de la viscosité du liquide présent dans le réservoir et destiné à former les gouttes.

En liaison avec la figure 2, on constate que, pour une vitesse fixée, la trajectoire des gouttes G varie en fonction de leur taille. La trajectoire de la goutte est notamment impactée par la force de trainée $\vec{F}_{Drag}$. Les gouttes qui disposent d'une taille supérieure à 100 µm présentent des trajectoires similaires dans l'air. Pour les gouttes qui disposent d'une taille inférieure à 50 µm de diamètre, on distingue plusieurs trajectoires distinctes. Lorsque le mouvement des gouttes s'effectue dans un fluide plus dense et/ou plus visqueux que l'air, la force de trainée $\vec{F}_{Drag}$ est plus importante, et donc la sensibilité de la trajectoire des gouttes à leur taille est plus grande, même pour les gouttes de taille supérieure à 100 µm.

En fonctionnement classique, la trajectoire des gouttes est déviée vers la paroi du tube, notamment par l'effet de la force de Coriolis.

Des précisions sur la trajectoire de gouttes par centrifugation sont données dans la demande de brevet WO2022/135756A1.

On a constaté que lors de la production de gouttes G, a fortiori à haute fréquence, celles-ci n'ont pas forcément le temps de gélifier avant d'atteindre le fond du tube 201.

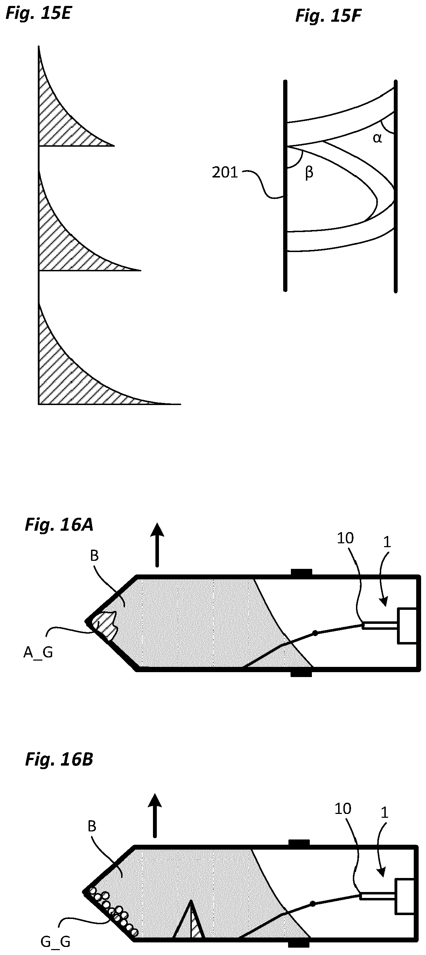

L'invention consiste donc à augmenter le parcours suivi par chaque goutte G dans le bain gélifiant B pour que la goutte G ait suffisamment de temps pour gélifier avant d'atteindre le fond du tube 201 (gouttes gélifiées G_G - figure 16B) et éviter ainsi de créer un amas A_G en fond de tube (figure 16A). Autrement dit, l'invention permet d'augmenter le temps de sédimentation de chaque goutte G au sein du bain gélifiant B, avant que les gouttes n'atteignent le fond du tube.

Pour cela, l'invention consiste à munir la surface interne de la paroi latérale du tube 201 d'au moins un déflecteur D chargé de dévier la trajectoire de chaque goutte G et d'allonger son parcours à l'intérieur du bain gélifiant B. Un obstacle approprié placé contre la paroi du tube permet ainsi de rallonger le parcours des gouttes et ainsi d'augmenter le temps de gélification dans le bain de calcium avant que les gouttes ne s'amassent au fond du tube 201. La figure 1 montre ce principe d'ajout d'un déflecteur D et la figure 6A illustre l'influence, sur la trajectoire T de la goutte, de l'ajout du déflecteur D sur la paroi du tube 201.

La figure 6B montre la trajectoire T suivie par la goutte dans le tube, lorsque celui-ci est rempli d'un bain gélifiant B superposé d'une couche tampon C_T, permettant notamment à la goutte G de reprendre sa forme sphérique avant de pénétrer dans le bain gélifiant B.

Par le terme "déflecteur", on entend donc un moyen qui permet de modifier la trajectoire T des gouttes et de les dévier de la trajectoire qu'elle suivrait normalement, sans la présence du déflecteur D.

Le déflecteur D est placé sur le trajet des gouttes et forme au moins une rampe par rapport à la surface interne du tube, cette rampe ayant une pente inclinée, de l'amont vers l'aval dans le sens de projection des gouttes, de la surface interne du tube vers l'axe du tube.

Comme la section interne d'un tube 201 standard est généralement cylindrique, l'ajout du déflecteur D vient ainsi modifier la topographie de cette section interne et créer un rétrécissement de cette section interne à l'emplacement du déflecteur.

Il faut noter que le déflecteur D est positionné sur la trajectoire de la goutte, sur la surface interne du tube 201, en aval par rapport à la surface du bain gélifiant B et en amont du fond du tube 201.

Le déflecteur D peut être réalisé sous la forme d'une pièce distincte venant s'agencer contre la surface interne de la paroi latérale du tube 201. Il peut également être directement intégré à la surface, par exemple en réalisant un moulage particulier du tube pour créer le déflecteur sur sa surface interne. Toute autre solution pourrait être envisagée.

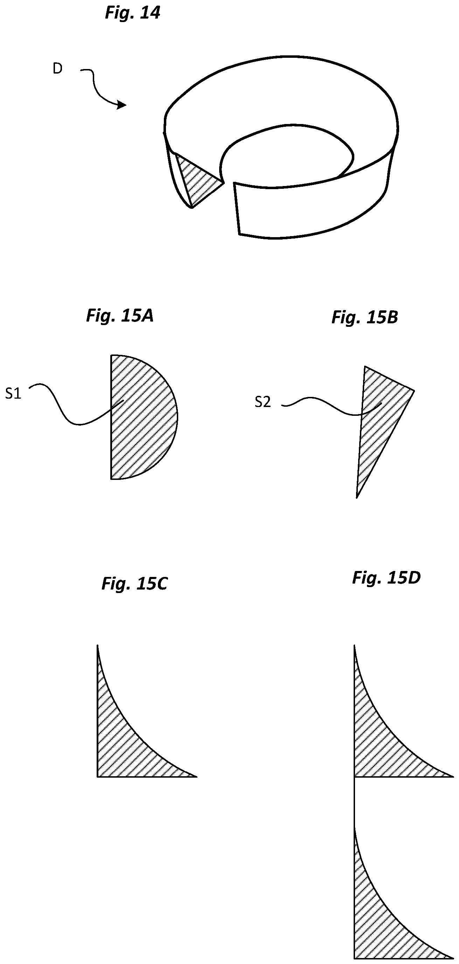

De manière non limitative et simplifiée, le déflecteur D se présente par exemple sous la forme d'une pièce ayant une section à base triangle rectangle, agencée contre la surface interne du tube 201, par l'une de ses faces adjacentes à son angle droit, de manière à présenter son hypoténuse face à la goutte lorsqu'elle transite à l'intérieur du bain gélifiant. On verra ci-après en liaison avec la figure 14 que la pièce peut présenter une forme d'anneau venant se positionner contre la surface interne du tube 201.

Le déflecteur D pourrait bien entendu prendre d'autres formes, à partir du moment où la fonction d'allongement de la durée de transit se trouve être remplie. Différentes configurations/formes de déflecteur seront décrites ci-après en liaison avec les figures 15A à 15F. A titre d'exemple, les figures 15A et 15B montrent deux autres formes qui pourraient être envisageables. Un premier déflecteur peut disposer d'une section S1 en demi-cercle (figure 15A). Le deuxième déflecteur peut présenter une section S2 triangle (figure 15B) agencée différemment de celle décrite ci-dessus.

Le déflecteur D forme ainsi une marche pour chaque goutte G qui transite dans le bain gélifiant B, cette marche étant positionnée sur la surface interne du tube 201.

Dans le cadre de l'invention, en référence à la figure 6C, avec un déflecteur D ayant une section triangulaire, on a constaté qu'il est également possible de jouer sur deux autres paramètres définissant la forme de la section du déflecteur D :

- La hauteur h_step du déflecteur D, qui correspond à la longueur de la base de la section contre la surface interne du tube 201 (selon la direction y) ;

- L'angle Angle_step du déflecteur D, qui correspond à l'angle d'appui fait par la section contre la surface interne, adjacent à l'angle droit ;

On pourrait également définir la forme de la section du déflecteur par d'autres paramètres (longueur de son hypoténuse, longueur de son autre côté selon la direction x).

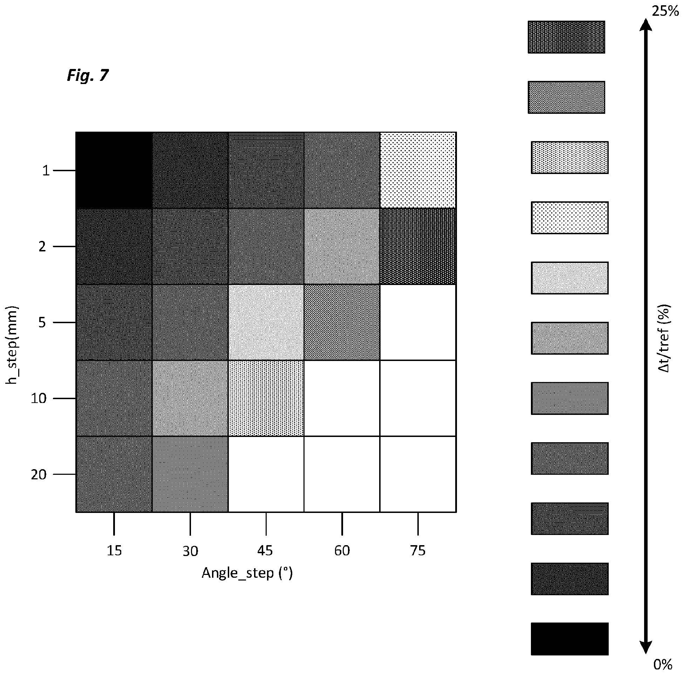

En référence à la figure 7, une étude paramétrique a été réalisée pour déterminer l'augmentation du temps de transit ($\Delta t$/tref (en %)) dans le bain gélifiant B en fonction de l'angle Angle_step du déflecteur et de sa hauteur h_step (longueur de son côté selon y).

A titre d'exemple, à partir du diagramme de la figure 7, on constate que la présence d'un déflecteur D à 75° et d'une hauteur de 2mm augmente le temps de transit dans le bain de gélification d'environ 25% par rapport à la situation sans déflecteur.

Outre l'angle Angle_step du déflecteur D, plusieurs autres paramètres peuvent s'avérer pertinents dans l'allongement du temps de transit, tels que le nombre N_step de déflecteurs employés et leur position respective dans le tube 201.

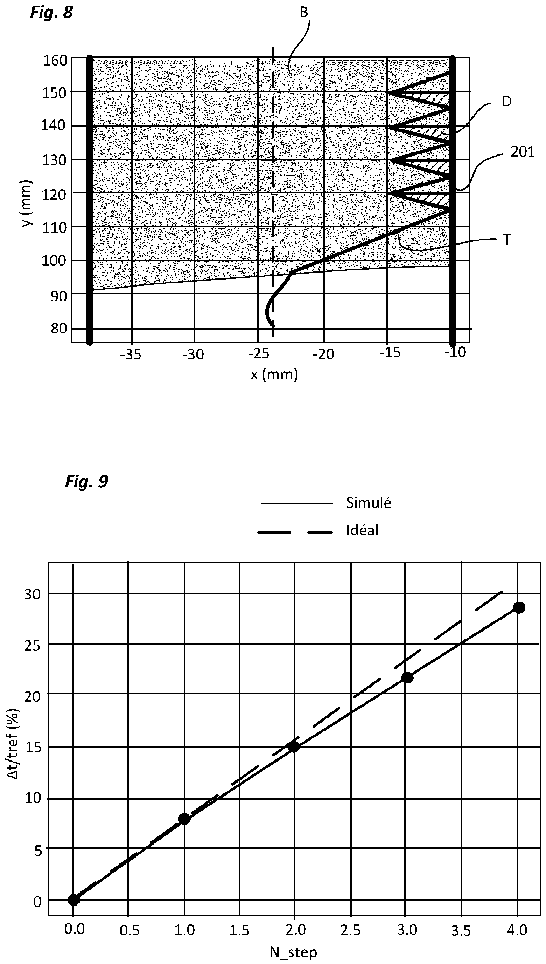

La figure 8 montre un exemple de système à quatre déflecteurs D identiques, ayant un angle de 45° et une hauteur de 5mm et illustre la trajectoire T suivie par une goutte dans cette configuration.

La Figure 9 illustre l'augmentation du temps de transit ($\Delta t$/tref (en %)) lorsqu'on augmente le nombre de déflecteurs D par rapport à une situation sans déflecteur. Chaque déflecteur D est identique avec un angle de 45° et une hauteur de 5mm. Lorsque le nombre de déflecteurs augmente, le temps de transit augmente linéairement.

Chaque déflecteur ajouté allonge la distance parcourue et donc le temps de transit des gouttes G dans le bain gélifiant B avant qu'elles n'atteignent le fond du tube 201. Ainsi les gouttes G ont un temps de polymérisation plus important, ce qui permet d'avoir des gouttes gélifiées/capsules qui ne se collent pas entre elles au fond de tube en fin de production.

Sur la figure 9, on constate que la configuration de la figure 8 est proche de la situation idéale, où le rajout de chaque marche supplémentaire permet un gain supplémentaire égal au gain par le premier ralentisseur.

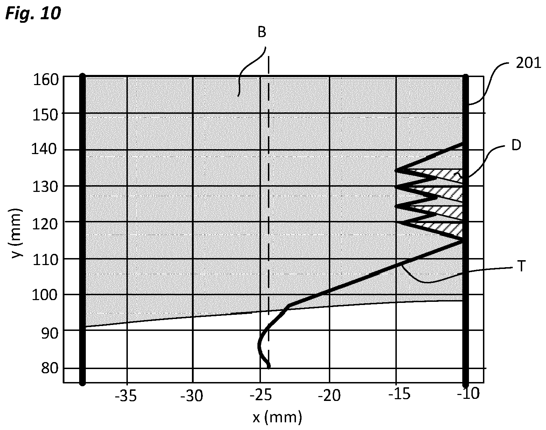

En revanche, comme illustré par la figure 10, on peut noter que le pas ou l'espacement laissé entre chaque déflecteur D ne doit pas être choisi trop faible. Dans ce cas, la goutte G aura en effet tendance à ne pas suivre toute la surface proposée par chaque déflecteur. L'augmentation de son temps de parcours ne sera alors pas optimale.

A titre d'exemple, l'efficacité totale de la présence de quatre déflecteurs baisse à 50% quand le pas est trop faible (figure 10), par rapport à la situation où le pas est suffisant (figure 8).

Il faut noter que la position de chaque déflecteur D doit être choisie judicieusement pour bien utiliser toute

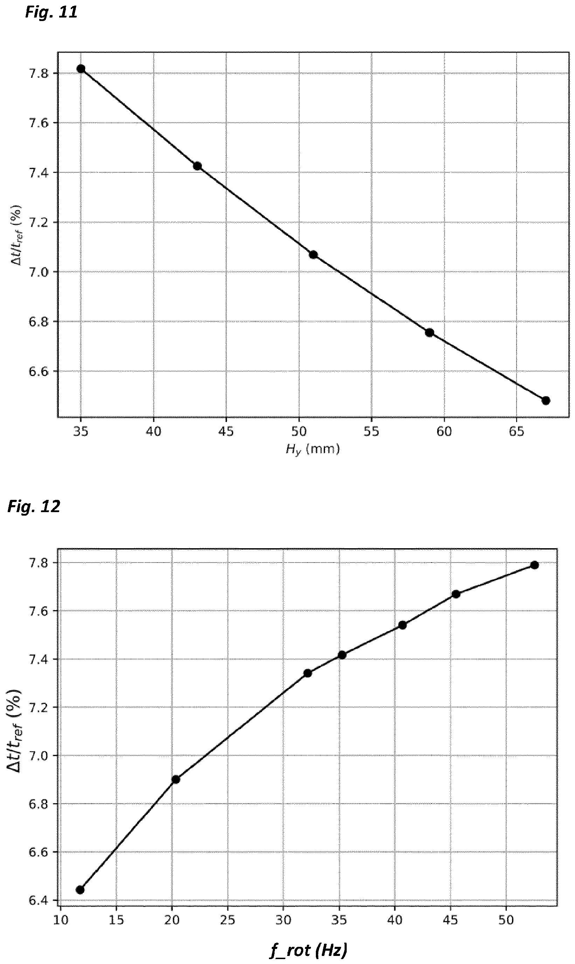

En liaison avec la figure 11, on voit en effet que plus le déflecteur D est placé profondément dans le tube 201, moins bonne est son efficacité. Sur cette figure 11, on constate que plus la hauteur Hy est importante (correspondant à la profondeur d'enfoncement du déflecteur D dans le tube par rapport à l'extrémité du capillaire - figure 6A), plus le temps de transit dans le bain gélifiant B sera faible. Cela est lié au fait que, vers le fond du tube, l'accélération centrifuge est plus grande, donc la goutte G mettra moins de temps à contourner le déflecteur D. Une perte de 20% d'efficacité peut être atteinte par rapport à la situation où le déflecteur est placé plus en amont dans le tube. Idéalement, le déflecteur D sera placé dans le bain gélifiant à une hauteur Hy comprise entre 0 et 95% de la hauteur totale (mesurée entre la sortie du capillaire 100 et le fond du bain gélifiant/tube).

On peut également noter que l'augmentation de la vitesse de rotation du module M peut également permettre d'augmenter l'efficacité du déflecteur jusqu'à 20%. La figure 12 illustre cela. On constate en effet que plus la fréquence de rotation f_rot (liée à la vitesse de rotation ω de la centrifugeuse par la relation ω=2π.f_rot) appliquée par la centrifugeuse au module M augmente, plus le déflecteur D sera efficace, avec une augmentation de la durée de son parcours relatif dans le bain gélifiant B. Cela s'explique par le fait que le temps total de transit dans le bain gélifiant B se raccourcit, le gain en temps de transit dû au déflecteur D est alors plus important rapporté au temps total de transit.

Il faut cependant noter que la cinématique de gélification ne dépend pas de la vitesse de rotation appliquée au tube 201 et que le principe de l'invention consiste à allonger au maximum le temps absolu passé par les gouttes dans le bain gélifiant. Pour allonger le temps absolu de transit dans le bain gélifiant, il faut avantageusement ajouter des déflecteurs.

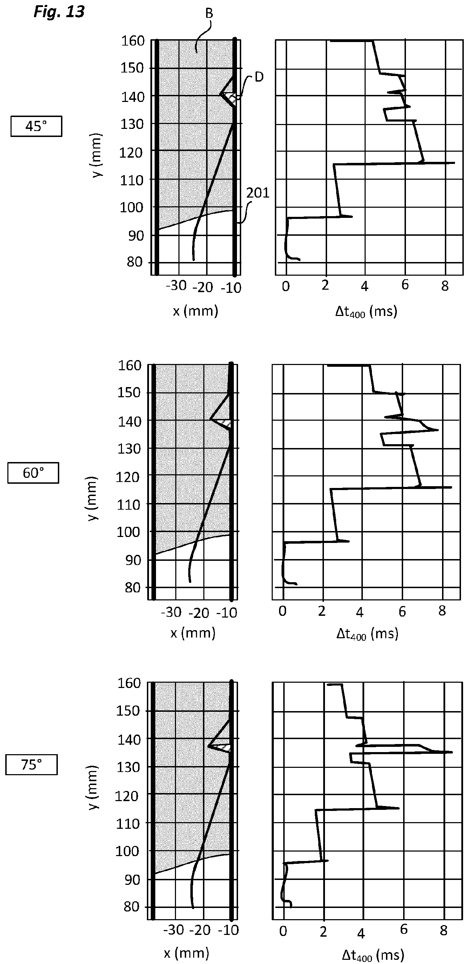

Enfin, comme les gouttes G peuvent être produites à haute fréquence, il faut également veiller à trouver un compromis entre fréquence de sortie des gouttes et temps de parcours des gouttes. Autrement dit, la goutte G ne doit pas être trop ralentie pour éviter que la goutte suivante ne vienne en contact avec elle. Il faut donc éviter que les gouttes restent coincées au niveau du déflecteur D ou qu'elles soient trop ralenties, ce qui peut générer une coalescence avec les gouttes qui arrivent par l'arrière. La figure 13 illustre cette particularité. Sur cette figure 13, on peut voir que pour un angle de 60° et un angle de 75°, la partie la plus lente de la trajectoire T de la goutte est la partie au niveau du déflecteur. Ces durées doivent être comparées à la période de production des gouttes (inverse de la fréquence). Si cette période est proche de ces durées, il existe un risque de coalescence entre deux gouttes successives.

Un exemple concret de réalisation d'un déflecteur D est représenté sur la figure 14. Le déflecteur D se compose d'un anneau, par exemple en matériau plastique, usiné de manière adaptée aux dimensions prévues (hauteur et angle). L'anneau est interrompu de manière à lui conférer un effet élastique. Il peut ainsi venir se bloquer contre la surface interne du tube 201, à la hauteur voulue, sans modification de l'architecture du tube, ce dernier pouvant conserver son caractère standard.

Si on utilise plusieurs déflecteurs, les anneaux peuvent être superposées à l'intérieur du tube 201. Il est également possible de regrouper les anneaux en une seule pièce, formant une architecture symétrique en forme de "sapin" (voir ci-dessous).

Les figures 15A à 15E donnent plusieurs exemples de réalisation du dispositif de l'invention, avec un ou plusieurs déflecteurs dans le tube :

- Figure 15A : Un déflecteur ayant une section transversale en demi-cercle ;

- Figure 15B : Un déflecteur ayant une section transversale en triangle rectangle ayant une orientation distincte de celle décrite ci-dessus ;

- Figure 15C : Un déflecteur ayant une rampe de déviation concave ;

- Figure 15D : Plusieurs déflecteurs identiques à rampe concave superposées ;

- Figure 15E : Plusieurs déflecteurs à rampe concave superposées avec longueur de rampe croissante en direction du fond du tube ;

- Figure 15F : Déflecteur formant une rampe en hélice (avec possible réglage des angles α et β pour obtenir une hélice symétrique ou asymétrique) ;

L'invention présente ainsi de nombreux avantages, parmi lesquels :

- L'invention vise la production à haute fréquence de gouttes gélifiées qui demeurent séparées et de taille uniforme.

- Une réalisation simple pour assurer la gélification des gouttes au sein d'un système standard ;

- Une réalisation facilement ajustable ; il est ainsi possible d'utiliser des déflecteurs de dimensions différentes (hauteur et angle), d'ajuster le nombre de déflecteurs et de régler la hauteur de chaque déflecteur dans le tube (notamment grâce à une réalisation sous forme d'anneau) ;

**Revendications**

1. Module (M) destiné à être employé dans un système de production de gouttes gélifiées, ledit système comportant une centrifugeuse, ledit module (M) étant monté sur la centrifugeuse et actionnable en rotation autour d'un axe, dit axe de centrifugation, par ladite centrifugeuse, le système comportant également une unité de production de gouttes (G) comportant un réservoir de liquide et une buse d'expulsion (10) coopérant avec le réservoir et par laquelle des gouttes peuvent être produites par centrifugation, ledit module (M) comportant un tube (201) dans lequel les gouttes sont expulsées, ledit tube étant délimité par un fond et une paroi latérale définissant un volume interne destiné à recevoir sur une partie de sa hauteur un bain gélifiant (B), lesdites gouttes étant destinées à atteindre le fond du tube en traversant le bain gélifiant, ladite paroi latérale du tube comportant une surface interne et une surface externe, ledit module étant **caractérisé en ce que** la surface interne porte au moins un déflecteur (D) formant une rampe par rapport à ladite surface interne pour dévier la trajectoire de chaque goutte à l'intérieur du bain gélifiant en vue d'allonger son parcours et de favoriser leur gélification avant d'atteindre le fond du tube.

2. Module selon la revendication 1, **caractérisé en ce que** la surface interne porte plusieurs déflecteurs (D) superposés.

3. Module selon la revendication 1 ou 2, **caractérisé en ce que** ledit au moins un déflecteur (D) présente une section transversale en forme de triangle rectangle.

4. Module selon la revendication 3, **caractérisé en ce que** ledit au moins déflecteur (D), ayant une section en forme de triangle rectangle comporte un angle et un premier côté suivant la direction longitudinale du tube qui sont choisies de manière à ce qu'un deuxième côté s'étende sur une longueur suivant la direction transversale au tube qui est comprise entre 1% et 95% du diamètre du tube (201) lorsque celui-ci est de section circulaire.

5. Module selon la revendication 1 ou 2, **caractérisé en ce que** le déflecteur comporte au moins une face de forme concave.

6. Module selon la revendication 1 ou 2, **caractérisé en ce que** ledit au moins un déflecteur (D) présente une section transversale en forme de demi-cercle.

7. Module selon l'une des revendications 1 à 6, **caractérisé en ce que** ledit au moins un déflecteur (D) est réalisé sous la forme d'un anneau, destiné à être enfoncé dans le tube.

8. Module selon la revendication 7, **caractérisé en ce que** ledit anneau est interrompu pour disposer d'un effet élastique.

9. Module selon l'une des revendications 1 à 8, **caractérisé en ce que** la buse d'expulsion (10) est réalisée à l'extrémité d'un capillaire (100) connecté audit réservoir de liquide.

10. Module selon l'une des revendications 1 à 9, **caractérisé en ce que** le réservoir (11) de liquide est intégré au tube (201) du module.

11. Module selon la revendication 10, **caractérisé en ce que** le capillaire (100) est fixé au module (M) et coopère avec son réservoir (11).

12. Système de production de gouttes gélifiées, par centrifugation au sein d'un fluide, ledit système étant **caractérisé en ce qu'**il comporte :

    - Une centrifugeuse,
    - Au moins un module (M) monté sur la centrifugeuse et actionnable en rotation autour d'un premier axe par ladite centrifugeuse, ledit module étant tel que défini dans l'une des revendications 1 à 11.

13. Procédé de création de gouttes gélifiées mis en oeuvre à l'aide d'un système de production, **caractérisé en ce que** le système de production est tel que défini dans la revendication 12, ledit procédé étant **caractérisé en ce qu'**il consiste à intégrer au moins un déflecteur porté par la surface interne du tube (201) et agencé pour dévier la trajectoire de chaque goutte à l'intérieur du bain gélifiant (B) en vue d'allonger leur parcours et de favoriser leur gélification avant d'atteindre le fond du tube (201).

Fig. 1

*Fig. 2*

*Fig. 3*

**Fig. 4**

**Fig. 5**

Fig. 6A

Fig. 6B

Fig. 6C

*Fig. 7*

*Fig. 8*

*Fig. 9*

**Fig. 10**

**Fig. 11**

**Fig. 12**

**Fig. 13**

**Fig. 14**

D

**Fig. 15A**

S1

**Fig. 15B**

S2

**Fig. 15C**

**Fig. 15D**

**Fig. 15E**

**Fig. 15F**

**Fig. 16A**

**Fig. 16B**

Europäisches
Patentamt

European
Patent Office

Office européen
des brevets

# RAPPORT DE RECHERCHE EUROPEENNE

Numéro de la demande

**EP 23 21 2719**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | WO 2022/135756 A1 (COMMISSARIAT ENERGIE ATOMIQUE [FR]) 30 juin 2022 (2022-06-30) * page 15, lignes 3-14; figures 2,8 * ----- | 1-13 | INV. B01J2/02 B01J2/08 B01J13/00 |
| X | CN 201 166 620 Y (QIANGSHI TRADE SHANGHAI CO LTD [CN]) 17 décembre 2008 (2008-12-17) | 1-12 | |
| A | * figures 3,4,11 * ----- | 13 | |
| A | FR 2 501 061 A1 (AGIP NUCLEARE SPA [IT]) 10 septembre 1982 (1982-09-10) * le document en entier * ----- | 1-13 | |
| A | DE 12 42 565 B (AGA AB) 22 juin 1967 (1967-06-22) * le document en entier * ----- | 1-13 | |

**DOMAINES TECHNIQUES RECHERCHES (IPC)**

**B01J**

Le présent rapport a été établi pour toutes les revendications

| Lieu de la recherche | Date d'achèvement de la recherche | Examinateur |
|---|---|---|
| La Haye | 21 avril 2024 | Gruber, Marco |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 21 2719

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-04-2024

| Document brevet cité au rapport de recherche | Date de publication | Membre(s) de la famille de brevet(s) | Date de publication |
|---|---|---|---|
| WO 2022135756 A1 | 30-06-2022 | EP 4263037 A1 | 25-10-2023 |
| | | FR 3117884 A1 | 24-06-2022 |
| | | WO 2022135756 A1 | 30-06-2022 |
| CN 201166620 Y | 17-12-2008 | AUCUN | |
| FR 2501061 A1 | 10-09-1982 | BE 892387 A | 06-09-1982 |
| | | DE 3208047 A1 | 16-09-1982 |
| | | DE 8206204 U1 | 23-01-1986 |
| | | FR 2501061 A1 | 10-09-1982 |
| | | GB 2094771 A | 22-09-1982 |
| | | IT 1136857 B | 03-09-1986 |
| DE 1242565 B | 22-06-1967 | AUCUN | |

EPO FORM P0460

Pour tout renseignement concernant cette annexe : voir Journal Officiel de l'Office européen des brevets, No.12/82

**EP 4 385 615 A1**

## RÉFÉRENCES CITÉES DANS LA DESCRIPTION

**Documents brevets cités dans la description**

- WO 2022135756 A1